# EUROPEAN PATENT SPECIFICATION

(11) **EP 2 252 445 B1**
(45) Date of publication and mention of the grant of the patent: **01.08.2012**
(21) Application number: 09706269.9
(22) Date of filing: 21.01.2009
(51) Int. Cl.: B29C 43/34, B29C 31/04

(54) **Apparatus for transferring doses of plastic material**
Vorrichtung zur Übertragung von Dosen von Kunststoffmaterial
Appareil pour transférer des doses de matière plastique

(30) Priority: 29.01.2008 IT MO20080023
(43) Date of publication of application: 24.11.2010
(73) Proprietor: SACMI Cooperativa Meccanici Imola Società Cooperativa, 40026 Imola (Bologna) (IT)
(72) Inventor: ZUFFA, Zeno, 40021 Borgo Tossignano (IT); CAVINA, Giambattista, 48018 Faenza (RA) (IT); PARRINELLO, Fiorenzo, 40059 Medicina (IT)
(74) Representative: Villanova, Massimo
(86) International application number: PCT/IB2009/000088
(87) International publication number: WO 2009/095753

(56) References cited:
- WO-A1-2006/109108
- WO-A1-2008/102224
- WO-A2-2005/102641
- WO-A2-2008/017915

## Description

The invention relates to an apparatus for transferring doses of plastic material.

WO 2005/102641 A2 discloses an apparatus comprising transferring means arranged for delivering doses of plastic material to a compression-moulding device; said transferring means comprises containing means arranged for receiving said doses; said containing means is made at least partially of a porous material.

WO 2008/102224 A1 discloses an apparatus comprising transferring means arranged for delivering doses of plastic material to a compression-moulding device; said transferring means comprises rolling means arranged for receiving said doses; said rolling means can be made of a porous material.

Apparatuses are known for compression-moulding doses of plastic material comprising a forming carousel in a peripheral region of which there are associated forming moulds, the forming moulds comprising a mould cavity - i.e. a female half mould - and a punch - i.e. a male half mould that are movable in relation to one another.

Each mould cavity is arranged for receiving a dose of plastic material in pasty state when the mould cavity is distant from the punch. The mould cavity and the punch are moved towards one another so that the punch penetrates inside the mould cavity and interacts with the dose of plastic material to mould the dose of plastic material. Apparatuses are also known that supply the mould cavities with doses of plastic material in a pasty state.

The aforesaid apparatuses comprise cutting devices that cut the plastic material that exits a dispensing nozzle of an extruder to give rise to the doses. The cutting devices may comprise one or several cutting elements, and one or more contrasting elements that act as abutting means for the plastic material and prevent a cutting element, after separating a dose from the plastic material that exits the dispensing nozzle, from removing the dose from a delivering zone.

Such apparatuses comprise a first carousel supporting a plurality of removing elements that remove the doses that the cutting devices have separated from the dispensing nozzle and a second carousel supporting a plurality of distributing elements that receive the doses of plastic material from the aforesaid removing elements and deliver the removing elements to the mould cavities.

The first carousel and the second carousel have coinciding rotating axes and are arranged so that the removing elements are positioned at a vertical height that is greater than that of the distributing elements and the distributing elements are positioned at a vertical height that is greater than that of the mould cavities.

The removing elements are fixed to a peripheral zone of the first carousel and move along a circular path.

The distributing elements are supported by movable arms associated with the second carousel and move along a closed-loop path, this closed-loop path comprising a portion coinciding with a part of the aforesaid circular path, a further portion coinciding with a part of the trajectory - which is also circular - defined by the mould cavities during rotation, and two connecting portions interposed between the aforesaid portion and the aforesaid further portion.

In operation, a removing element removes a dose of plastic material from the extruder and, subsequently, delivers the dose of plastic material to a corresponding distributing element whilst the removing and distributing elements are mutually superimposed and move along coinciding circular trajectory portions.

Still subsequently, whilst the removing element continues to travel along a circular trajectory, a movable arm moves the distributing element away from the removing element and makes the distributing element supply a mould cavity.

The distributing element delivers the dose of plastic material to the mould cavity whilst the distributing element is superimposed on the mould cavity and moves along a portion of circular trajectory defined by the mould cavity. The movable arm enables the distributing element and the mould cavity to interact for a time that is longer than that during which they would interact if the distributing element were fixed to a peripheral zone of the second carousel. This enables an interval of time to be provided that is of significant length during which the dose can move from the distributing element to the mould cavity.

In the apparatuses disclosed above, each distributing element comprises a tubular casing that has an upper opening, through which a dose coming from a removing element enters inside the tubular casing and a lower opening through which the dose passes from the tubular casing to a mould cavity.

A drawback of the apparatuses disclosed above consists of the fact that the dose of plastic material tends to stick to the inside walls of the tubular casing.

A further drawback is that, when the dose is transferred from the distributing element to the mould cavity, the distributing element and the mould cavity are separated from one another by a considerable distance. As a result, the dose, whilst it travels the aforesaid distance - dropping by the force of gravity or pushed by a pressurised fluid - has a certain tendency to deviate from a theoretically provided trajectory.

As a result, the dose may not be received correctly inside the mould cavity.

The theoretically provided trajectory depends, amongst other things, on the forces (for example centrifugal force and centripetal force) that develop through the effect of the movement speed of the distributing element.

As the doses have a diameter that is slightly less than an internal diameter of the aforesaid tubular casing, the longitudinal axis of each dose, also because of the action of the aforementioned forces, tends not to coincide with the longitudinal axis of the tubular casing. As a result, the dose can interact with a portion of an internal wall of the tubular casing and adhere to this portion.

Further, also if the transferring element manages to deliver the dose to the mould cavity, an external surface of the dose may be damaged due to an excessive rubbing against the internal wall of the tubular casing. This can lead to an object, which has been obtained by compression-moulding of the dose, that has poor aesthetic and/or structural properties.

An object of the invention is to improve apparatuses for transferring doses of plastic material.

Another object is to obtain an apparatus for transferring doses of plastic material in which the tendency of the doses to adhere to the conveying elements of the doses with which the apparatus is provided is noticeably limited.

A further object is to obtain an apparatus for transferring doses of plastic material that correctly deposits the doses inside mould cavities that are intended for receiving the doses.

According to the invention, an apparatuses according to claim 1 is provided.

Owing to this aspect of the invention, it is possible to obtain an apparatus in which the doses are accompanied by the transferring means up to an upper edge, or even as far as the inside of mould cavities of the compression-moulding device, which enables the transfer of the doses to be simplified and positioning thereof inside the mould cavities to be improved.

In addition, as the movement-promoting means is made at least partially of porous material, a thermal conditioning fluid can flow through the pores of the aforesaid porous material so as to interact with the doses. The thermal conditioning fluid, for example a cooling fluid, thermally conditions (for example cools) the doses, in accordance with the needs of a technological process to which the doses are subjected. This enables the adhesion of the doses to the movement-promoting means to be reduced significantly. Further, the thermal conditioning fluid can form, between a wall of the movement-promoting means and the doses, a layer of fluid that promotes the flow of the doses in relation to the aforesaid wall. In particular, the aforesaid layer of fluid contributes to keeping the aforesaid wall clean and preventing particles of the plastic material that forms the doses from depositing on the aforesaid wall. The plastic material may comprise additives of various types, for example pigments, stabilisers and the like, that may significantly increase the formation of deposits of plastic material on the aforesaid wall, which makes the movement and the transfer of the doses difficult.

Using a porous material enables a simple and effective cooling system of the movement-promoting means to be obtained.

The invention can be better understood and implemented with reference to the attached drawings that illustrate some embodiments thereof by way of non-limiting example, in which:
Figure 1 is a plan view of an apparatus comprising a compression-moulding device and a device for transferring doses of plastic material;
Figure 2 is a side view of the device for transferring doses of plastic material of Figure 1;
Figure 3 is a plan view of the device for transferring doses of plastic material of Figure 1;
Figure 4 is a partial perspective view of a conveying element for conveying the device for transferring doses of plastic material;
Figure 5 is a section taken along a longitudinal plane of a first conveying element which is not part of the invention;
Figure 6 is an enlarged detail of Figure 5;
Figure 7 is a section like the one in Figure 5 that shows a second conveying element which is not part of the invention;
Figure 8 is an enlarged detail of Figure 7;
Figure 9 is a section like the one in Figure 5 that shows a third conveying element which is not part of the invention;
Figure 10 is an enlarged detail of Figure 9;
Figure 11 is a section like the one in Figure 5 that shows a fourth conveying element which is not part of the invention;
Figure 12 is an enlarged detail of Figure 11;
Figure 13 is a section like the one in Figure 5 that shows a first embodiment of a conveying element;
Figure 14 is an enlarged detail of Figure 13;
Figure 15 is a section like the one in Figure 5 that shows a second embodiment of a conveying element;
Figure 16 is an enlarged detail of Figure 15.

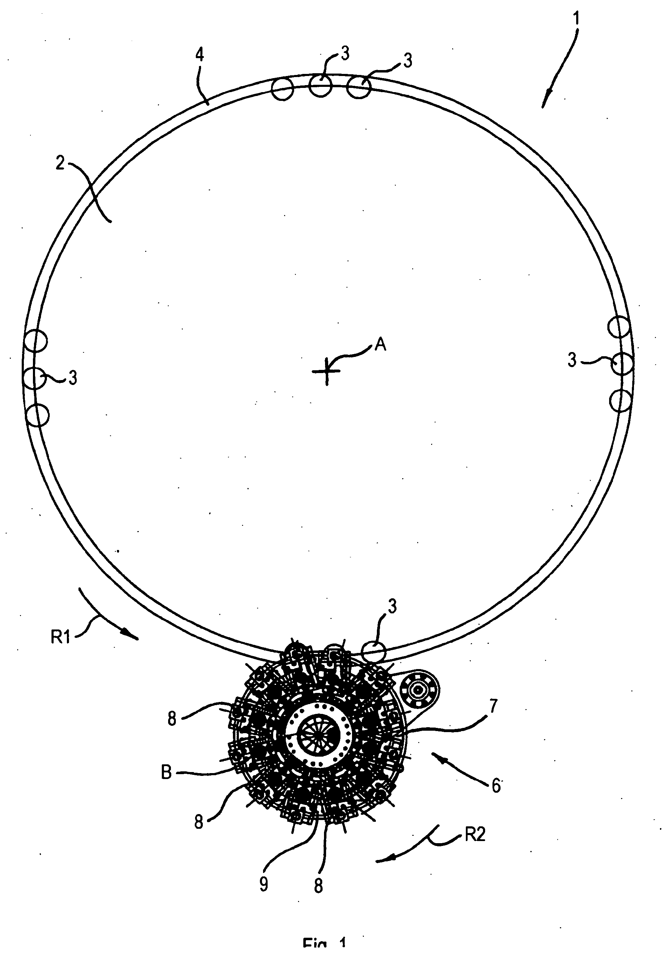

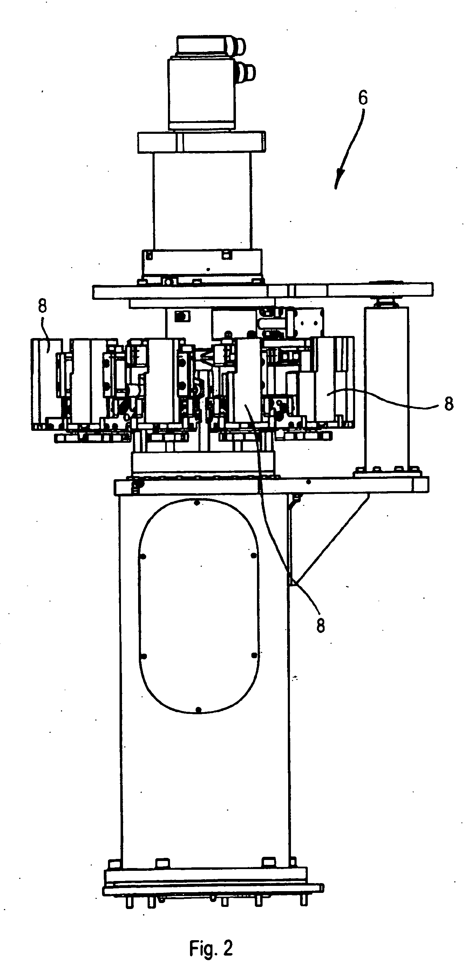

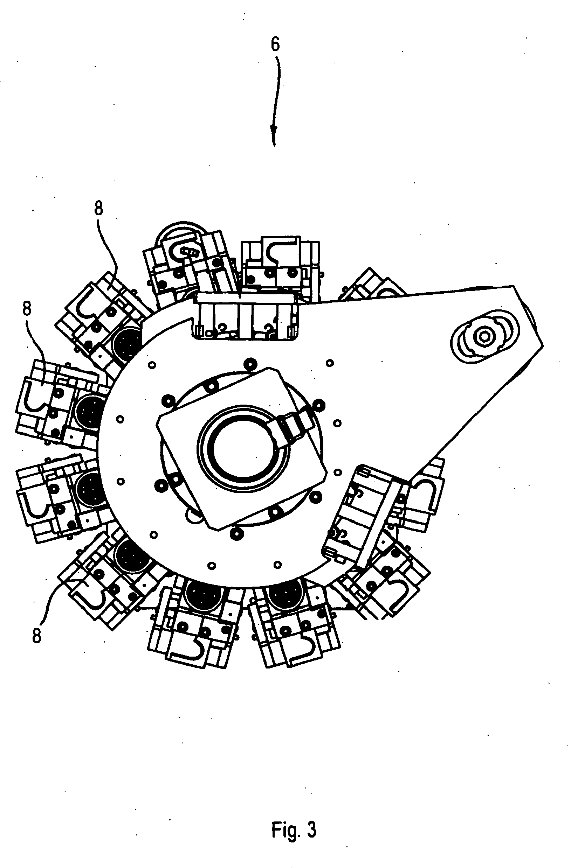

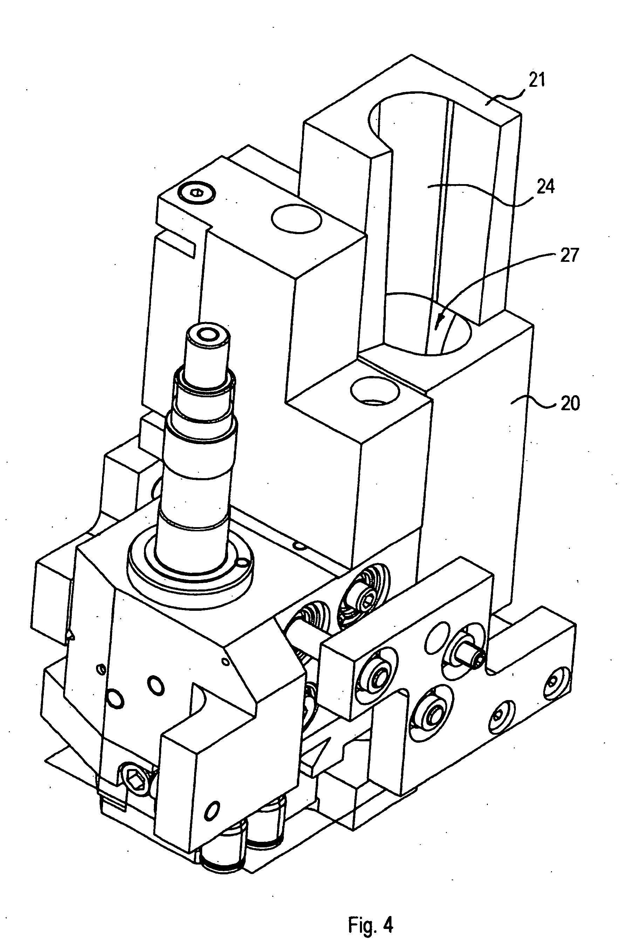

With reference to Figures 1 to 16, there is shown a forming device 1 for compression-moulding doses of plastic material comprising a carousel 2 that is rotatable around an axis A, in a direction R1, and supporting a plurality of forming moulds 3. The forming moulds 3 are positioned in a peripheral zone 4 of the carousel 2 and are arranged so as to be substantially angularly equidistant.

For the sake of simplicity, only some of the forming moulds 3 are shown in Figure 1.

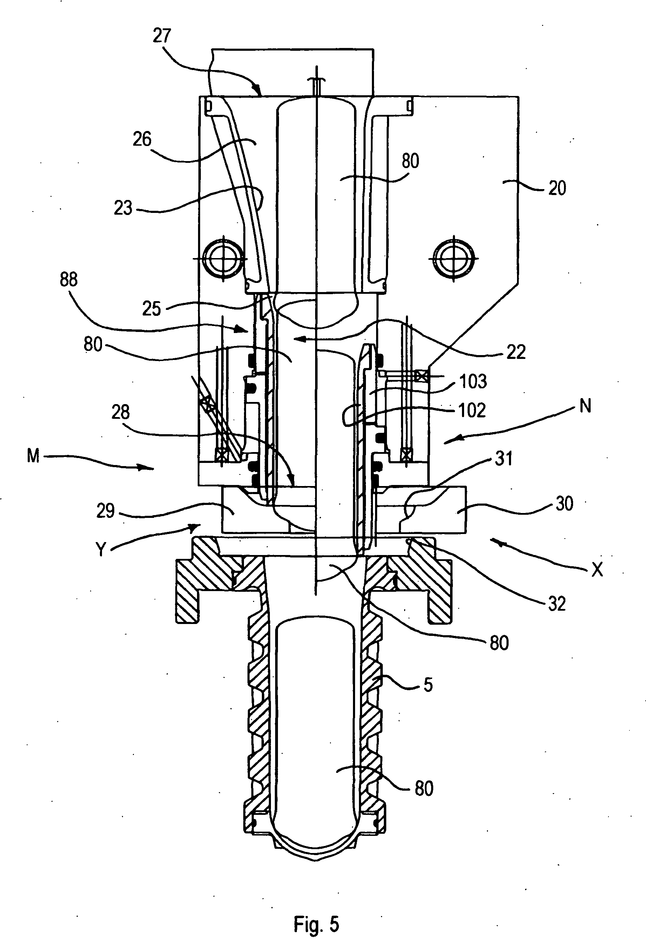

Each forming mould 3 comprises a mould cavity 5 (shown in Figures 5 to 16) and a punch - not shown - that are mutually movable. The forming mould 3 can assume an open configuration, in which the mould cavity 5 and the punch are mutually separated so that a dose 80 of plastic material is inserted inside the mould cavity 5 and a formed object, for example a container perform, is removed from the forming mould 3, and a closed configuration, in which the punch penetrates inside the mould cavity 5 to shape the dose 80. In an embodiment that is not shown, the forming device 1 comprises, instead of the carousel 2, a moving and supporting element of the forming moulds 3 provided with a flexible element, for example a belt or chain element that is movable along a closed-loop path.

Cutting devices are also provided, which are not shown, that cut the plastic material that protrudes from a dispensing device of a plasticising device, for example an extruder, to give rise to the doses 80. The cutting devices may comprise one or several cutting elements and one or more contrasting elements that act as abutting means for the plastic material and prevent a cutting element, after a dose has been separated from the plastic material that exits the dispensing nozzle, from removing the dose from a delivering zone. There is further provided a conveying device 6 that receives the doses 80 that, the aforesaid cutting devices have separated from the dispensing nozzle and delivers the doses 80 to the forming device 1.

The conveying device 6 comprises a further carousel 7 rotatable around a further axis B, in a further direction R2, and supporting a plurality of conveying elements 8 positioned in a further peripheral zone 9 of the further carousel 7 and arranged so as to be substantially angularly equidistant. The carousel 2 and the further carousel 7 can be rotated by driving devices - for example electric motors - that are independent and mutually synchronised.

In an embodiment that is not shown, the conveying device 6 comprises instead of the further carousel 7 a moving and supporting element of the conveying elements 8 provided with a flexible element, for example a belt or chain element that is movable along a closed-loop path.

Each conveying element 8 comprises a receiving element 21, arranged for receiving a dose 80 that the aforesaid cutting devices have separated from the dispensing nozzle, and a delivering element 20, arranged for delivering the dose 80 to a mould cavity 5.

The delivering element 20 comprises a containing portion 22, arranged for containing the dose 80 and for conferring on the dose 80 a desired shape and a connecting portion 23, interposed between the receiving element 21 and the containing portion 22 and arranged for promoting the transfer of the dose 80 from the receiving element 21 to the containing portion 22.

The receiving element 21 has a "C" or "U", or "J" shape and is provided internally with a gap 24, that is open in the further rotating direction R2, and generally shaped as an upturned frustum of cone, i.e. having a section that decreases as it approaches the connecting portion 23.

The containing portion 22 is internally provided with a recess 25 with a substantially cylindrical shape.

The connecting portion 23 is internally provided with a further recess 26 shaped as an upturned frustum of cone, i.e. having a section that decreases as it approaches the containing portion 22. In other words, the connecting portion 23 is funnel-shaped for promoting the insertion of the dose 80 into the containing portion 22.

The delivering element 20 is provided, at the connecting portion 23, with an inlet opening 27 through which the dose 80, removed from the extruder (or from the aforesaid cutting devices that cut the plastic material that exits a dispensing nozzle of the extruder to give rise to the doses 80) by the receiving element 21, penetrates inside the delivering element 20.

The delivering element 20 is provided, at the containing portion 22, with an outlet opening 28 through which the dose 80 is delivered to a mould cavity 5.

A first closing element 29 and a second closing element 30 are provided that are associated with the outlet opening 28 and are movable between an open configuration X, shown in the right part of Figures 5 to 16, in which the first closing element 29 and the second closing element 30 enable the passage of the dose 80 through the outlet opening 28, and a closed configuration Y, shown in the left part of Figures 5 to 16, in which the first closing element 29 and the second closing element 30 prevent the passage of the dose 80 through the outlet opening 28.

The first closing element 29 and the second closing element 30 comprise a shaped portion 31 arranged for disposing on the tip of the dose 80 a desired shape.

With reference to Figures 5 to 16, there is shown a delivering element 20 comprising a containing portion 22 provided with a guiding element 87 arranged for directing the dose 80 to the mould cavity 5.

The guiding element 87 comprises a sleeve 88 received inside the recess 25.

The guiding element 87 is movable between a retracted position M, shown in the left part of Figures 5 to 16, in which the sleeve 88 is contained inside the containing portion 22, and an extended position N, shown in the right part of Figures 5 to 16, in which the sleeve 88 projects through the outlet opening 28, possibly beyond the first closing element 29 and the second closing element 30, for delivering the dose 80 to the mould cavity 5.

In the conveying elements 8 shown in Figures 5 to 8 and 13 to 16, when the guiding element 87 is in the extended configuration N, an end portion of the sleeve 88 extends below an upper edge 32 of the mould cavity 5.

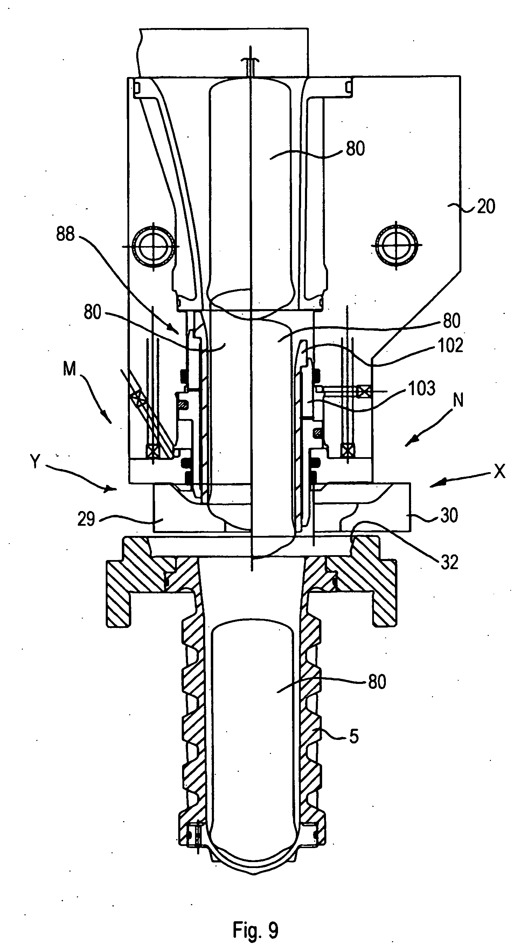

In the conveying elements 8 shown in Figures 9 to 12, when the guiding element 87 is in the extended configuration N, an end portion of the sleeve 88 is maintained above the upper edge 32 of the mould cavity 5. The guiding element 87 assumes the retracted position M when the first closing element 29 and the second closing element 30 are in the closed configuration Y.

The guiding element 87 assumes the extended position N when the first closing element 29 and the second closing element 30 are in the open configuration X.

For ease of understanding, each of Figures 5 to 16 shows the same dose 80 in a plurality of successive positions. Further, as indicated above, each of Figures 5 to 16, for ease of understanding shows, - alongside one another, i.e. one on the right side and one on the left side - two distinct operating configurations of the guiding element 87. The guiding element 87 comprises an annular ridge 89 that leads away from the sleeve 88 to be received in a housing 91 obtained in the containing portion 22.

The annular ridge 89 comprises a first rib 92 and a second rib 93, that are spaced apart from one another, between which a groove 94 is defined that receives a sealing element 95 arranged for interacting with the housing 91.

The annular ridge 89 divides the housing 91 into a first chamber 96 and into a second chamber 97.

The first chamber 96 is supplied with an operating fluid, for example pressurised air, through a conduit 98.

The second chamber 97 is supplied with an operating fluid, for example pressurised air, through a further conduit 99. In operation, when the guiding element 87 is in the retracted position M, the second chamber 97 is supplied with the operating fluid.

The annular ridge 89 is moved until the second rib 93 abuts on an abutting surface 100 of the housing 91.

The guiding element 87 thus passes from the retracted position M to the extended position N.

Subsequently, the first chamber 96 is supplied with the operating fluid.

The annular ridge 89 is moved until the first rib 92 abuts on a further abutting surface 101 of the housing 91.

The operating fluid inside the second chamber 97 is evacuated through the further conduit 99.

The guiding element 87 returns, in this manner from the extended position N to the retracted position M.

The sleeve 88 comprises - i.e. is made at least in part of - a porous material.

The aforesaid material can be, for example, porous polytetrafluorethylene (PTFE).

The porous polytetrafluorethylene (PTFE) can have the following properties:
- average dimensions of the pores from 20 to 100 micron;
- percentage volume of the pores from 20% to 50%;
- density from approximately 1.1 g/cm³ to approximately 1.6 g/cm³.

The porous polytetrafluorethylene (PTFE) is obtained by binding together microcapsules - in particular spherical microcapsules - of polytetrafluorethylene (PTFE). Between the mutually bound microcapsules there are empty spaces that bestow the desired porosity. The aforesaid empty spaces have a substantially uniform distribution in relation to the mass of polytetrafluorethylene (PTFE). With the porous polytetrafluorethylene (PTFE) it is possible to obtain guiding elements 87 having walls that have low surface energy, such walls being highly hydrophobic. The aforesaid walls are thus very slidable and have a very small tendency to retain doses 80.

In order to obtain the porous polytetrafluorethylene (PTFE) binding resins are not necessary that alter the chemical composition thereof. This contributes to making porosity very uniform.

Through the pores of the porous material a fluid can be supplied, in particular a pressurised fluid, for example compressed air, that further hinders the adhesion of the doses 80 to the guiding element 87 as it forms a layer, or buffer, interposed between the doses 80 and the guiding element 87. The aforesaid fluid can be suitably cooled, to improve the anti-adhesive effect. If a pressurised fluid is used, when this fluid exits the pores of the porous material, it expands, decreasing the temperature thereof. This enables cooling of the doses 80 to be improved further. The aforesaid fluid can be the same operating fluid that moves the guiding element 87 from the retracted position M to the extended position N, and vice versa.

This enables very simple conveying elements 8 to be obtained inasmuch as the fluid intended to exit the pores of the porous material does not require dedicated supplying conduits.

Alternatively, the fluid intended to exit the pores of the porous material can be supplied to the guiding element 87 by dedicated supplying conduits.

The porous polytetrafluorethylene (PTFE) is shaped so that the pores can be traversed by the gases, for example air, but cannot be traversed by liquids, for example water, having a pressure lower than a preset value.

It is thus possible to provide a "mixed" cooling system i.e. a cooling system in which some parts of the guiding element 87 are in contact with a low-pressure cooling system (for example 0,1 - 0,3 bar) and further parts of the guiding element 87 are also traversed by a cooling gas.

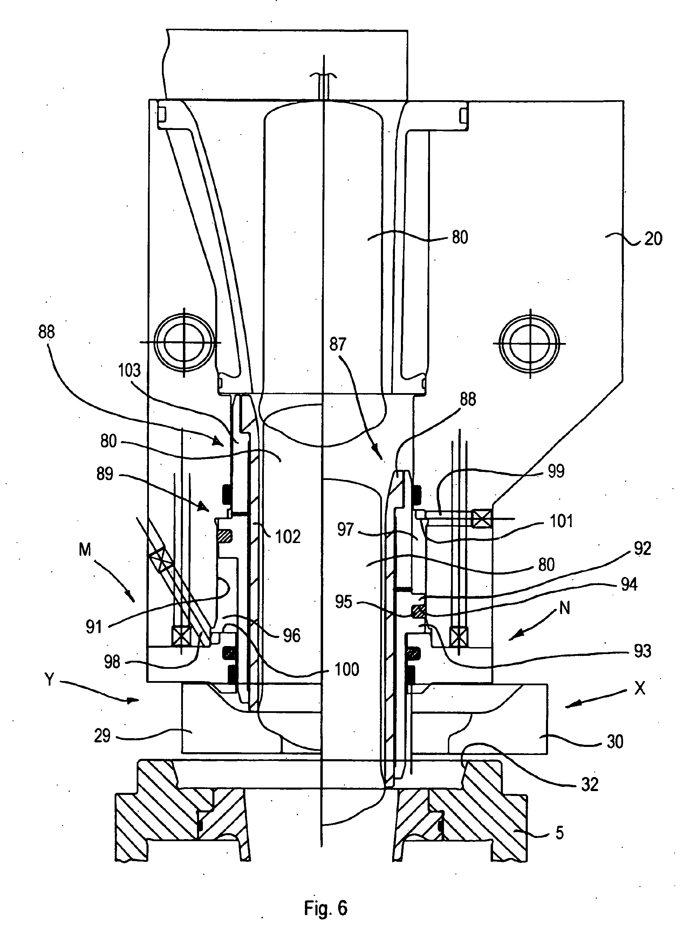

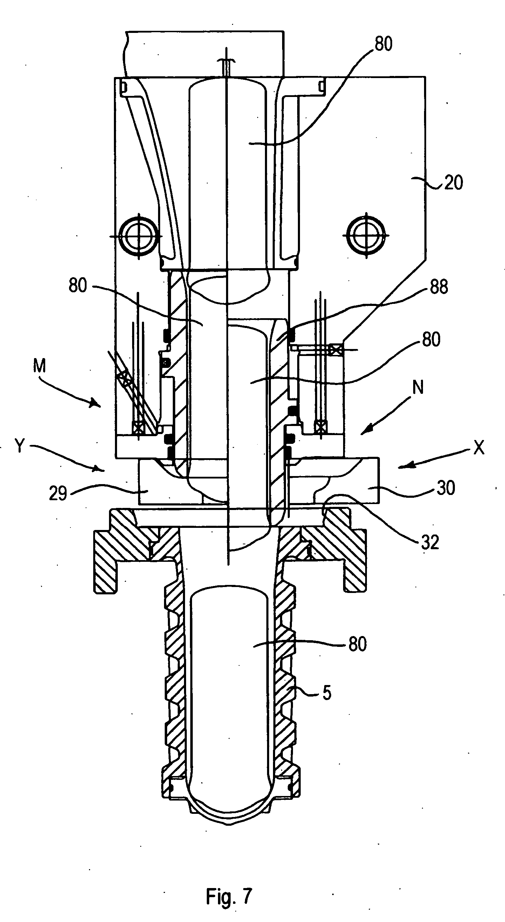

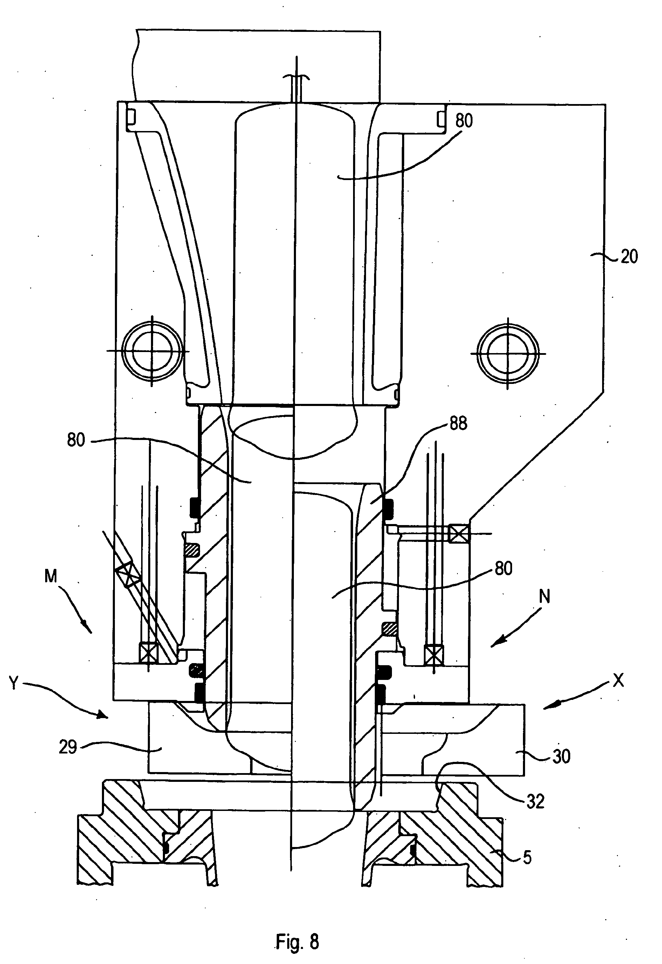

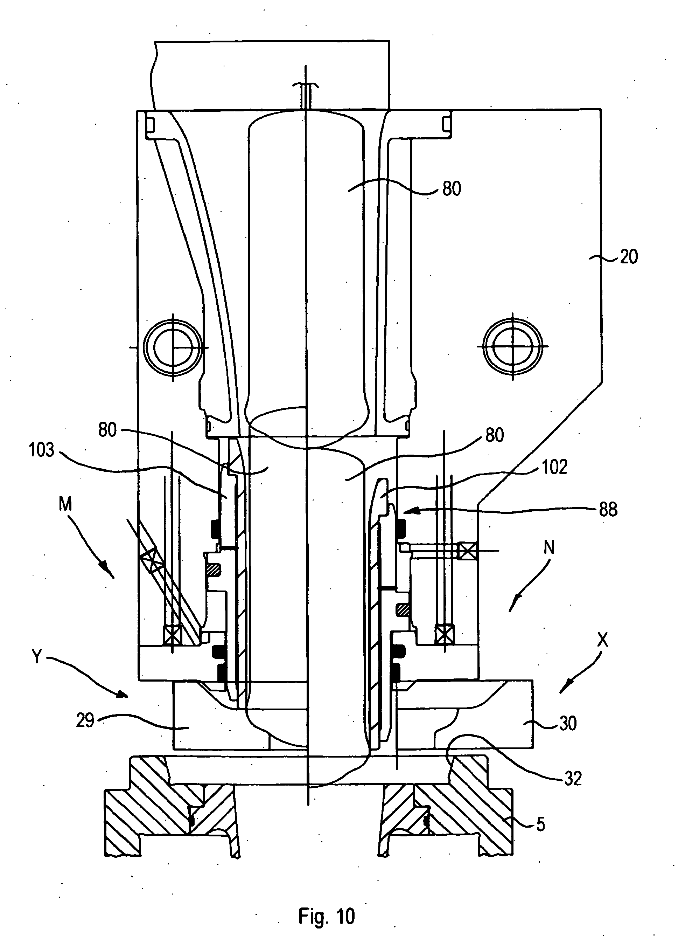

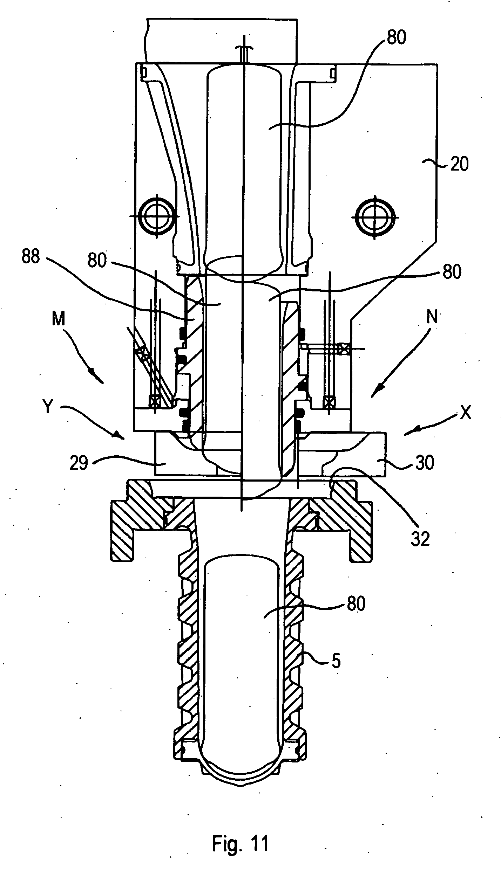

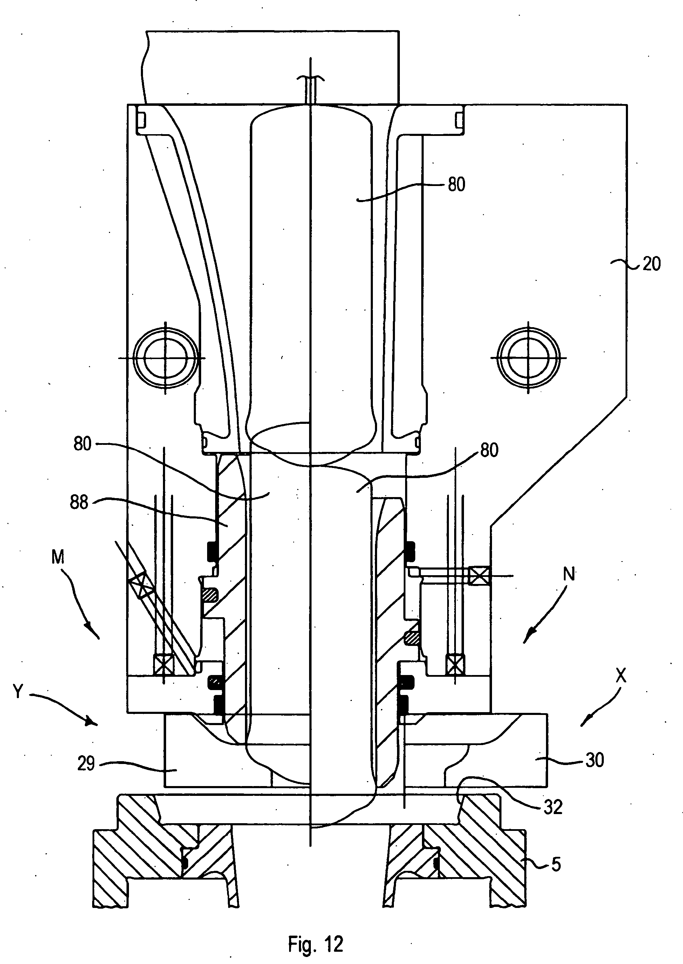

With reference to Figures 7 and 8 and to Figure 11 and 12 two conveying elements 8 which are not part of the invention are shown in which the sleeve 88 is integrally made of porous material. With reference to Figures 5 and 6 and to Figures 9 and 10, two embodiments of the conveying element 8 are shown in which the sleeve 88 comprises an internal tubular element 102, intended for interacting with the doses 80, made of porous material and an external tubular element 103, intended for receiving and surrounding at least partially the internal tubular element 102, made of non-porous material, for example of metal. The external tubular element 103 can be traversed by conduits arranged for supplying a cooping fluid that cools the external tubular element 103. The fluid intended for exiting the pores of the porous material that forms the internal tubular element 102 can be the same operating fluid that moves the guiding element 87 from the retracted position M to the extended position N, and vice versa. In this case, in the external tubular element 103 openings can be provided that enable the passage of the aforesaid fluid.

Alternatively, the fluid intended for exiting the pores of the porous material that forms the internal tubular element 102 can be supplied to the guiding element 87 through dedicated supplying conduits.

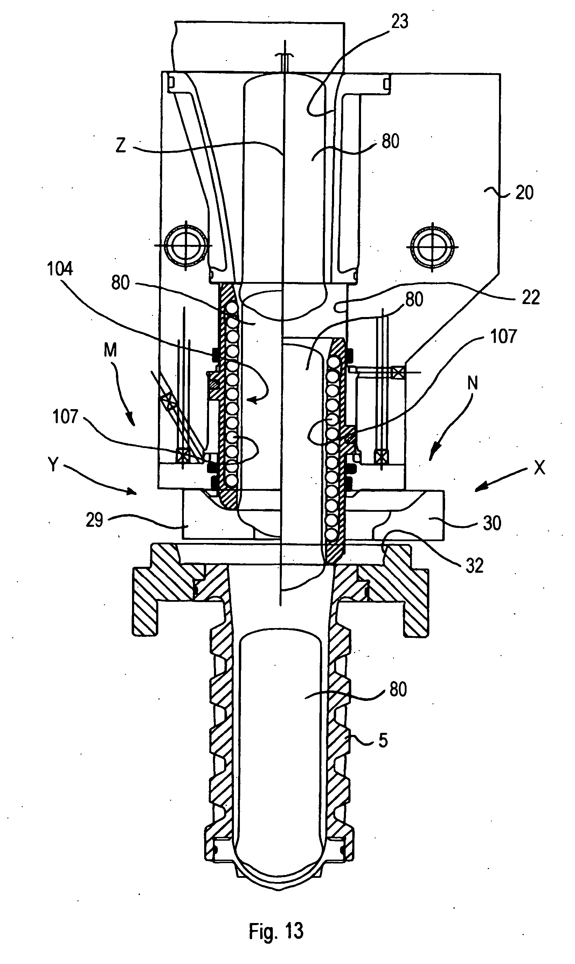

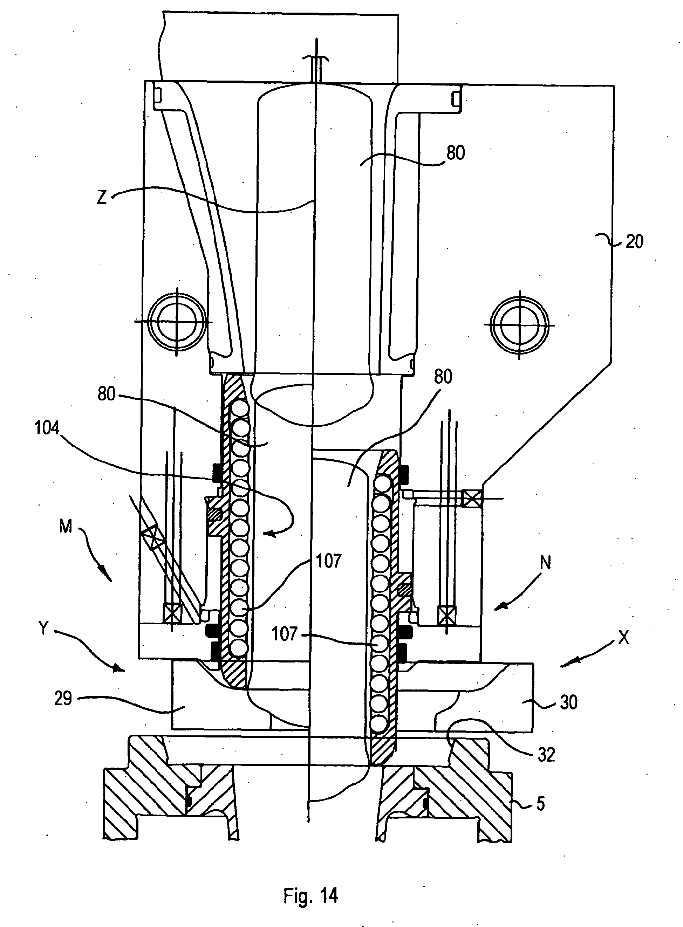

With reference to Figures 13 and 14, there is shown an embodiment of the conveying element 8 in which the sleeve 88 rotatably supports rolling means 104.

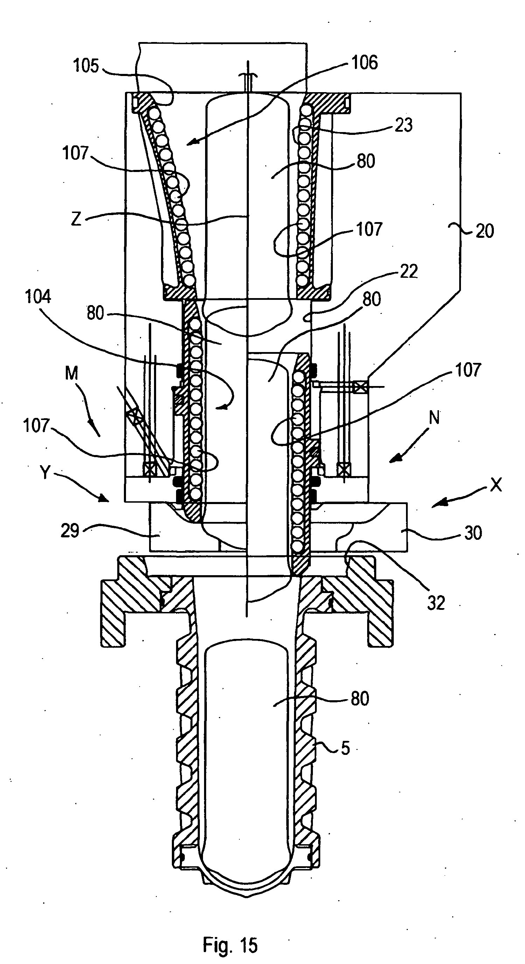

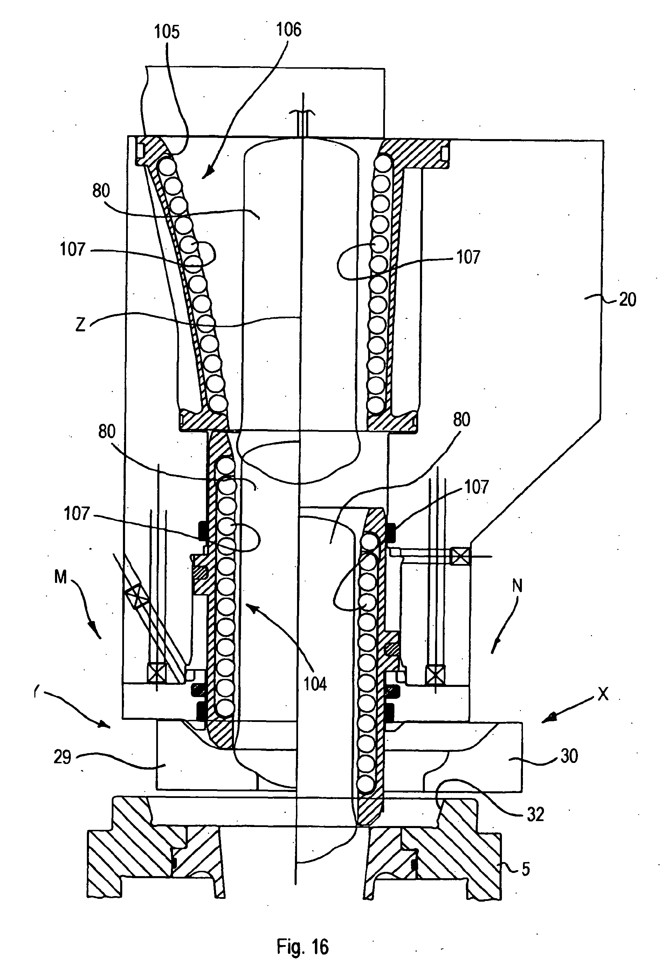

In this embodiment, the sleeve 88 is made completely of porous material, as in the embodiments of the conveying element 8 shown in Figures 7 and 8 and in Figures 11 and 12. The rolling means 104 can also be provided in the embodiments of the tubular element 8 shown in Figures 5 and 6 and in Figures 9 and 10, i.e. in the embodiments of the conveying element 8 that provide for the sleeve 88 comprising the internal tubular element 102 made of porous material and the external tubular element 103 made of non-porous material. In this way, the rolling means 104 is rotatably supported by the internal tubular element 102. With reference to Figures 15 and 16, there is shown an embodiment of the conveying element 8 in which an internal wall 105 of the receiving portion 21 rotatably supports further rolling means 106.

The rolling means 104 and the further rolling means 106 enables the dose 80 to be guided that is inside the containing portion 22 or, respectively, the connecting portion 23 in a precise manner, which reduces the risk that the dose 80 is tilted whilst it is conveyed from the delivering element 20. In this manner the impacts between the dose 80 and the internal surface of the delivering element 20 are reduced. The dose 80 is maintained aligned along a desired direction and can be introduced more easily into the mould cavities 5.

The contact between the dose 80 and the delivering element 20 occurs on restricted zones of the rolling means 104 and of the further rolling means 106 in which a rolling friction develops. Owing to this, the dose 80 can move inside the delivering element 20 at a rather high speed.

The rolling means 104 and the further rolling means 106 comprise rollers 107 that define a plurality of rows extending along a longitudinal axis Z of the delivering element 20.

The rollers 107 have rotating axes that lie on transversely arranged planes - in particular arranged substantially perpendicularly - with respect to the longitudinal axis Z. The rollers 107 positioned at the same vertical height define a polygon having a number of sides corresponding to the number of the aforesaid rows.

The rollers 107 can occupy substantially entirely the internal surfaces of the sleeve 88 and of the connecting portion 23.

In an embodiment, the rollers 107 can be hollow, so that they can be filled with substances that increase the heat-exchanging properties thereof. In this manner, the rollers 107 are able to dissipate the heat transmitted by the dose 80 more easily.

In another embodiment, the rollers 107 can be made of a. material having great thermal conductivity (for example rollers 107 made of aluminium can be provided).

The rollers 107 can have a suitably selected surface finish so as to ensure that the rollers have a low friction coefficient. In particular the rollers 107 may have a glazed external surface. This enables the adhesion of the plastic material to the rollers 107 to be reduced.

The rolling means 104 is cooled by the fluid that exits the pores of the material that forms the entire sleeve 88, or the internal tubular element 102.

Further, the aforesaid fluid generates a layer that limits the adhesion of the plastic material that forms the dose 80 to the rolling means 104.

The further rolling means 106 can be cooled by a fluid that circulates in conduits obtained in the connecting portion 23.

In the embodiments of the conveying element 8 shown in Figures 5 to 16 the entire delivering element 20 - i.e., in particular, also the connecting portion 23 - can be made of porous material.

In this case, the further rolling means 106 is cooled by the fluid that exits the pores of the material that forms the connecting portion 23.

Further, the aforesaid fluid generates a layer that limits the adhesion of the plastic material that forms the dose 80 to the further rolling means 106.

In an embodiment that is not shown, a wall of the receiving element 21 that bounds the gap 24 can rotatably support still further rolling means. The still further rolling means limits the friction between the doses 80 and the receiving element and guides the doses 80 whilst the latter traverse the receiving element.

The still further rolling means can comprise rollers shaped and positioned similarly to what has been disclosed with reference to the rollers 107.

## Claims

1. Apparatus, comprising transferring means (8) arranged for delivering doses (80) of plastic material to a compression-moulding device (1), said transferring means (8) comprising containing means (22) arranged for receiving said doses (80), **characterised in that** said transferring means (8) comprises movement-promoting means (87) received in said containing means (22) and movable with respect to said containing means (22) for delivering said doses (80) to said compression-moulding device (1), said movement-promoting means (87) being made at least partially of a porous material; on said movement-promoting means (87) rolling means (104) being rotatably supported that is arranged for interacting with said doses (80).

2. Apparatus according to claim 1, wherein said porous material comprises porous polytetrafluorethylene (PTFE).

3. Apparatus according to any preceding claim, and further comprising supply means arranged for supplying a fluid inside said containing means (22) through pores of said porous material.

4. Apparatus according to any preceding claim, wherein said movement-promoting means (87) comprises sleeve means (88).

5. Apparatus according to claim 4, wherein said sleeve means (88) comprises an internal tubular element (102) made of said porous material and an external tubular element (103) made of a non-porous material.

6. Apparatus according to any preceding claim, wherein said rolling means (104) comprises rollers (107) that define a plurality of rows extending along a longitudinal axis (Z) of said containing means (22); said rollers (107) having rotation axes that lie on planes arranged transversely with respect to said longitudinal axis (Z).

7. Apparatus according to any preceding claim, wherein said rolling means (104) comprises rollers (107) that occupy substantially entirely an internal surface of said movement-promoting means (87).

8. Apparatus according to any preceding claim, wherein said containing means (22) is provided internally with recess means (25) having a substantially cylindrical shape.

9. Apparatus according to any preceding claim, wherein said containing means (22) is made of said porous material.

10. Apparatus according to any one of claims 1 to 8, wherein said containing means (22) is made of a non-porous material.

11. Apparatus according to any preceding claim, wherein said transferring means (8) comprises connecting means (23) arranged for receiving said doses (80) and delivering said doses (80) to said containing means (22).

12. Apparatus according to claim 11, wherein said connecting means (23) is made of said porous material.

13. Apparatus according to claim 11, or 12, wherein internal wall means (105) of said connecting means (23) rotatably supports further rolling means (106) intended for interacting with said doses (80).

14. Apparatus according to any preceding claim, and further comprising carousel means (7) rotatable around rotation axis means (B) and supporting said transferring means (8), or further comprising a flexible movement element supporting said transferring means (8).

15. Apparatus according to any preceding claim, wherein said compression-moulding device (1) comprises a carousel (2) that is rotatable around a rotation axis (A) and supporting mould means (3), or wherein said compression-moulding device comprises a flexible movement element supporting mould means (3).

## Patentansprüche

1. Vorrichtung mit einem Übertragungsmittel (8), das dazu angeordnet ist, eine Dosis (80) eines Kunststoffmaterials zu einer Formpressvorrichtung (1) zu liefern, wobei das Übertragungsmittel (8) ein Behältermittel (22) aufweist, das dazu angeordnet ist, die Dosis (80) aufzunehmen, **dadurch gekennzeichnet, dass** das Übertragungsmittel (8) ein Bewegungsförderungsmittel (87) aufweist, das in dem Behältermittel (22) aufgenommen und in Bezug auf das Behältermittel (22) bewegbar ist, um die Dosis (80) zu der Formpressvorrichtung (1) zu liefern, wobei das Bewegungsförderungsmittel (87) zumindest teilweise aus einem porösen Material hergestellt ist, wobei an dem Bewegungsförderungsmittel (87) ein Rollenmittel (104) rotierbar gestützt ist, das zum Interagieren mit der Dosis (80) angeordnet ist.

2. Vorrichtung nach Anspruch 1, wobei das poröse Material ein poröses Polytetrafluorethylen (PTFE) aufweist.

3. Vorrichtung nach einem der voranstehenden Ansprüche, und des Weiteren mit einem Zuführmittel, das dazu angeordnet ist, ein Fluid innerhalb des Behältermittels (22) durch Poren des porösen Materials zuzuführen.

4. Vorrichtung nach einem der voranstehenden Ansprüche, wobei das Bewegungsförderungsmittel (87) ein Hülsenmittel (88) aufweist.

5. Vorrichtung nach Anspruch 4, wobei das Hülsenmittel (88) ein inneres röhrenförmiges Element (102) aufweist, das aus dem porösen Material hergestellt ist, und ein äußeres röhrenförmiges Element (103) aufweist, das aus einem nicht-porösen Material hergestellt ist.

6. Vorrichtung nach einem der voranstehenden Ansprüche, wobei das Rollenmittel (104) Rollen (107) aufweist, die eine Mehrzahl von Reihen definieren, die sich entlang einer longitudinalen Achse (Z) des Behältermittels (22) erstrecken, wobei die Rollen (107) Rotationsachsen aufweisen, die in Ebenen liegen, die in Bezug auf die longitudinale Achse (Z) transversal angeordnet sind.

7. Vorrichtung nach einem der voranstehenden Ansprüche, wobei das Rol-Ienmittel (104) Rollen (107) aufweist, die im Wesentlichen vollständig eine Innenfläche des Bewegungsförderungsmittels (87) einnehmen.

8. Vorrichtung nach einem der voranstehenden Ansprüche, wobei das Behältermittel (22) innen mit einem Ausnehmungsmittel (25) versehen ist, das eine im Wesentlichen zylindrische Form aufweist.

9. Vorrichtung nach einem der voranstehenden Ansprüche, wobei das Behältermittel (22) aus dem porösen Material hergestellt ist.

10. Vorrichtung nach einem der Ansprüche 1 bis 8, wobei das Behältermittel (22) aus einem nicht-porösen Material hergestellt ist.

11. Vorrichtung nach einem der voranstehenden Ansprüche, wobei das Übertragungsmittel (8) ein Verbindungsmittel (23) aufweist, das dazu angeordnet ist, die Dosis (80) aufzunehmen und die Dosis (80) zu dem Behältermittel (22) zu liefern.

12. Vorrichtung nach Anspruch 11, wobei das Verbindungsmittel (23) aus dem porösen Material hergestellt ist.

13. Vorrichtung nach Anspruch 11 oder 12, wobei ein Innenwandmittel (105) des Verbindungsmittels (23) ein weiteres Rollenmittel (106) rotierbar stützt, das dazu vorgesehen ist, mit der Dosis (80) zu interagieren.

14. Vorrichtung nach einem der voranstehenden Ansprüche, und des Weiteren mit einem Karussellmittel (7), das um ein Rotationsachsenmittel (B) rotierbar ist und das Übertragungsmittel (8) stützt, oder des Weiteren mit einem Element für eine flexible Bewegung, das das Übertragungsmittel (8) stützt.

15. Vorrichtung nach einem der voranstehenden Ansprüche, wobei die Formpressvorrichtung (1) ein Karussell (2) aufweist, das um eine Rotationsachse (A) rotierbar ist, und einem Formstützmittel (3), oder wobei die Formpressvorrichtung ein Formstützmittel-flexible-Bewegung-Element (3) aufweist.

## Revendications

1. Dispositif comprenant des moyens de transfert (8) prévus pour délivrer des doses (80) de matière plastique à un dispositif (1) de moulage par compression, lesdits moyens de transfert (8) comprenant des moyens de contenant (22) prévus pour recevoir lesdites doses (80), ***caractérisé en ce que*** lesdits moyens de transfert (8) comprennent des moyens (87) promoteurs de déplacement reçus dans lesdits moyens de contenant (22) et mobiles par rapport auxdits moyens de contenant (22) pour délivrer lesdites doses (80) audit dispositif de moulage par compression (1), lesdits moyens (87) promoteurs de déplacement étant réalisés au moins partiellement dans un matériau poreux, sur lesdits moyens (87) promoteurs de déplacement étant supportés de manière rotative des moyens de roulement (104) qui sont agencés pour interagir avec lesdites doses (80).

2. Dispositif selon la revendication 1, dans lequel ledit matériau poreux comprend du polytétrafluoroéthylène (PTFE) poreux.

3. Dispositif selon l'une quelconque des revendications précédentes, et comprenant en outre des moyens d'alimentation agencés pour fournir un fluide à l'intérieur desdits moyens de contenant (22) via les pores dudit matériau poreux.

4. Dispositif selon l'une quelconque des revendications précédentes, dans lequel lesdits moyens (87) promoteurs de déplacement comprennent des moyens de manchon (88).

5. Dispositif selon la revendication 4, dans lequel lesdits moyens de manchon (88) comprennent un élément tubulaire interne (102) réalisé dans ledit matériau poreux et un élément tubulaire externe (103) réalisé dans un matériau non poreux.

6. Dispositif selon l'une quelconque des revendications précédentes, dans lequel lesdits moyens de roulement (104) comprennent des rouleaux (107) qui définissent une pluralité de rangées s'étendant sur un axe longitudinal (Z) desdits moyens de contenant (22), lesdits rouleaux (107) ayant des axes de rotation qui se trouvent sur des plans disposés transversalement audit axe longitudinal (Z).

7. Dispositif selon l'une quelconque des revendications précédentes, dans lequel lesdits moyens de roulement (104) comprennent des rouleaux (107) qui occupent sensiblement la totalité d'une surface interne desdits moyens promoteurs de déplacement (87).

8. Dispositif selon l'une quelconque des revendications précédentes, dans lequel lesdits moyens de contenant (22) sont pourvus intérieurement de moyens de niche (25) ayant une forme sensiblement cylindrique.

9. Dispositif selon l'une quelconque des revendications précédentes, dans lequel lesdits moyens de contenant (22) sont réalisés dans ledit matériau poreux.

10. Dispositif selon l'une quelconque des revendications 1 à 8, dans lequel lesdits moyens de contenant (22) sont faits d'un matériau non poreux.

11. Dispositif selon l'une quelconque des revendications précédentes, dans lequel lesdits moyens de transfert (8) comprennent des moyens de raccordement (23) prévus pour recevoir lesdites doses (80) et délivrer lesdites doses (80) auxdits moyens de contenant (22).

12. Dispositif selon la revendication 11, dans lequel lesdits moyens de raccordement (23) sont réalisés dans ledit matériau poreux.

13. Dispositif selon la revendication 11 ou 12, dans lequel des moyens de paroi interne (105) desdits moyens de raccordement (23) supportent rotativement d'autres moyens de roulement (106) destinés à interagir avec lesdites doses (80).

14. Dispositif selon l'une quelconque des revendications précédentes, et comprenant en outre des moyens de carrousel (7) pouvant tourner autour de moyens d'axe de rotation (B) et supportant lesdits moyens de transfert (8), ou comprenant en outre un élément de mouvement flexible supportant lesdits moyens de transfert (8).

15. Dispositif selon l'une quelconque des revendications précédentes, dans lequel ledit dispositif (1) de moulage par compression comprend un carrousel (2) qui peut tourner autour d'un axe de rotation (A) et supportant des moyens de moule (3), ou dans lequel ledit dispositif de moulage par compression comprend un élément de mouvement flexible supportant des moyens de moule (3).
